# EUROPÄISCHE PATENTANMELDUNG

(11) **EP 2 057 898 A1**
(43) Veröffentlichungstag der Anmeldung: **13.05.2009**
(21) Anmeldenummer: 07021525.6
(22) Anmeldetag: 06.11.2007
(51) Int. Cl.: A01N 25/12, A01N 25/14, A01N 25/34, A01N 47/36

(54) **Homogene und lagerstabile Mischungen unterschiedlicher Pflanzenchutzmittel-Wirkstoff-Granulatpartikel**

(71) Anmelder: Bayer CropScience AG, 40789 Monheim (DE)
(72) Erfinder: Patel, Smita, Dr., 65817 Eppstein-Bremthal (DE); Rahman, Atiur, Dr., 65934 Frankfurt a. M. (DE)

(57) **Zusammenfassung**

Verwendung von und ein dazu gehöriges Herstellungsverfahren für Mischungen unterschiedlicher Pflanzenschutzmittel-Wirkstoff-Granutatpartikel, die beim Lagern, Handhaben und Ausbringen homogen bleiben, wobei mischungsunverträgliche Wirkstoffe in diesen Mischungen gemeinsam stabil gelagert werden können.

## Beschreibung

Die vorliegende Patentanmeldung betrifft die Verwendung von Mischungen unterschiedlicher Pflanzenschutzmittel-Wirkstoff-Granulatpartikel mit im wesentlichen isodimensionaler Form, die beim Lagern, Handhaben und Ausbringen homogen bleiben, wobei mischungsunverträgliche Wirkstoffe in diesen Mischungen gemeinsam stabil gelagert werden können. Ebenso betrifft die Anmeldung ein Verfahren zur Herstellung von Mischungen von Pflanzenschutzmittel-Wirkstoffen in Granulatform für mischungsunverträgliche Wirkstoffe.

Granulatpartikel von Pflanzenschutzmittel-Wirkstoffen zerfallen im Falle von wasserdispergierbaren Granulaten (WG) im Spritztankwasser unter Bildung einer feinen Dispersion von Primärpartikeln, die durch Spritzen auf Kulturen aufgebracht werden können. Daneben können Pflanzenschutzmittel-Wirkstoff-Granulatpartikel als andere Granulat-Formulierungstypen aber auch vollständig wasserlöslich sein oder sich trocken aufbringen lassen.

In der Landwirtschaft wird oftmals mehr als ein Pflanzenschutzmittel-Wirkstoff, im folgenden auch nur "Wirkstoff" genannt, benötigt, um eine spezielle Kultur zu behandeln. So wird beim Behandeln von Kulturen, z.B. durch Spritzen, angestrebt, die Mehrfachkombination von Wirkstoffen möglichst in einem Durchgang gleichzeitig aufzubringen, anstatt separate Durchgänge mit den jeweils einzelnen Wirkstoffen über dem Acker auszuführen. So gab es für den Bereich der Granulatanwendung verschiedene Ansätze Mehrfachkombination von Pflanzenschutzmittel-Wirkstoffen herzustellen.

Ein Ansatz ist die mechanische Mischung von Granulatpartikeln, die jeweils nur einem bestimmten Wirkstoff enthalten. Jedoch besteht mit diesen Granulat-"Mischungs-Gebinden" immer das Risiko einer Entmischung, welches an sich kein Problem ist, wenn immer der gesamte Inhalt des Gebindes verwendet wird. Wenn jedoch nur Teilmengen des Gebindes in den Spritzbehälter gegeben werden, kann es durch vorherige mechanische Entmischung des Gebindes, beispielsweise bei Lagerung und Handhabung, zu gravierenden Fehldosierungen kommen. Lösungen für diese Problematik werden u.a. in WO 94/24861 A1, JP 2004352711 A, und WO 97/00608 A1 aufgezeigt, wobei auf die richtige Granulatpartikel-Größe und deren Verteilung im Gebinde hingewiesen wird, WO 97/00608 A1 befasst sich auch mit der Bedeutung der Granulatform und sieht Granulatpartikel mit "zylindrischer Form", hergestellt durch Extrusionsverfahren, vorteilhafter als Granulatpartikel mit "isodimensionaler Form", hergestellt durch Agglomerations-Verfahren, wie Fließbett-oder Hochscherungs-Verfahren.

Ein Ansatz mit dem das Risiko einer Entmischung sicher vermieden wird, ist die Herstellung und Verwendung von Granutatpartikeln, die in bzw. auf jedem einzelnen Granulatpartikel bereits eine Mehrfachkombination mehrerer Pflanzenschutzmittel-Wirkstoffe in den gewünschten Konzentrationen und Mischungsverhältnissen tragen. Mit diesen Granulat-"Co-Formulierungen" wird allerdings die Flexibilität im Hinblick auf die speziellen Anforderungen der verschiedenen Kulturen und Märkte stark reduziert. Die Auswahl der Wirkstoff-Kombinationen für die benötigten individuellen Wirkstoffmischungen sowie deren Konzentrationen und Mischungsverhältnissen erhöht bei diesen Co-Formulierungen deren bereitzustellende Anzahl, was wiederum zu aufwändigen Herstellungs- und Lagerungsaufgaben führt. Daneben zeigte sich in der Praxis als gravierendes Problem, dass bestimmte Wirkstoffe sich als mischungsunverträglich in einer Granulat-Co-Formulierung erwiesen, d.h. dass sie sich in Kombination mit anderen Wirkstoffen abbauen und somit nicht lagerstabil coformuliert werden können.

Die Aufgabe der vorliegenden Erfindung bestand darin vorteilhafte Kombinationen mehrerer Pflanzenschutzmittel-Wirkstoffe in Granulatform bereitzustellen, in denen mischungsunverträgliche Wirkstoffe lagerstabil gelagert werden können.

Es wurde nun gefunden, dass die Aufgabe der vorliegenden Erfindung gelöst wird durch die Verwendung von rein mechanischen Mischungen von Wirkstoff-Granulatpartikeln mit im wesentlichen isodimensionaler Form, die sich mechanisch nicht mehr entmischen, also bei Lagerung, Handhabung und Ausbringung immer homogen bleiben, wodurch eine reproduzierbare Zusammensetzung selbst bei Teilentnahme aus dem Gebinde immer gewährleistet ist, mit dem überraschenden Effekt, dass Wirkstoffe, die über eine Mischungsunverträglichkeit untereinander verfügen, hierdurch miteinander gemeinsam stabil gelagert werden können.

Die vorliegende Erfindung betrifft somit die Verwendung von Mischungen unterschiedlicher Pflanzenschutzmittel-Wirkstoff-Granulatpartikel mit im wesentlichen isodimensionaler Form, die beim Lagern, Handhaben und Ausbringen homogen bleiben, wobei mischungsunverträgliche Wirkstoffe in diesen Mischungen gemeinsam stabil gelagert werden können.

Gemäß der vorliegenden Erfindung besteht die Mischung unterschiedlicher Pflanzenschutzmittel-Wirkstoff-Granulatpartikel aus einem Gemisch (Gebinde) von mindestens zwei Gruppen von Granulatpartikeln. Eine Gruppe der Granulatpartikel kann ein oder mehrere Pflanzenschutzmittel-Wirkstoffe enthalten und die andere(n) Gruppe(n) der Granulatpartikel können entweder auch ein oder mehrere Pflanzenschutzmiffel-Wirkstoffe enthalten und/oder weitere Stoffe, wie beispielsweise übliche Zusatz- und Hilfsstoffe, wie z.B. Adjuvantien, Düngemittel, Penetrationsförderer, Stabilisatoren.

Daneben betrifft die Erfindung in gleicher Weise auch ein Verfahren zur Herstellung von Mischungen von Pflanzenschutzmittel-Wirkstoffen in Granulatform für mischungsunverträgliche Wirkstoffe, wobei die mischungsunverträglichen Wirkstoffe, allein oder zusammen mit mischungsverträglichen Wirkstoffen, zuerst jeweils getrennt als Granulatpartikel einer Gruppe formuliert werden, die dann anschließend miteinander gemischt werden.

Der Begriff Pflanzenschutzmittel-Wirkstoffe bezeichnet agrochemische Wirkstoffe, wie beispielsweise Herbizide, Safener, Fungizide und Insektizide. Beispiele geeigneter Pflanzenschutzmittel-Wirkstoffe schließen die folgenden ein, ohne auf diese beschränkt zu sein, wobei im folgenden der Begriff Herbizide sowohl Herbizide wie auch Pflanzenwuchsregulatoren, der Begriff Fungizide sowohl Fungizide wie auch Bakterizide und Virizide und der Begriff Insektizide sowohl Insektizide wie auch Akarizide (Mitizide), Nematizide, Molluskizide, Rodentizide und Repellents (Antifraßstoffe) mit umfasst - soweit aus dem Zusammenhang nichts anderes hervorgeht.

Herbizide sind beispielsweise bekannte Wirkstoffe, die auf einer Inhibition von beispielsweise Acetolactat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441-445 oder in dem Handbuch "The Pesticide Manual". 12. Auflage 2000, 13. Auflage 2003 oder 14. Auflage 2006/2007, oder in dem entsprechenden "e-Pesticide Manual", Version 4 (2006), jeweils herausgegeben vom British Crop Protektion Council, und dort zitierter Literatur beschrieben. Als bekannte Herbizide oder Pflanzenwachstumsregulatoren, die in der vorliegenden Erfindung verwendet werden können, sind z.B. folgende Wirkstoffe zu nennen (die Verbindungen sind entweder mit dem "common name" nach der International Organization for Standardization (ISO) oder mit dem chemischen Namen oder mit der Codenummer bezeichnet) und umfassen stets sämtliche Anwendungsformen wie Säuren, Salze, Ester und Isomere wie Stereoisomere und optische Isomere. Dabei sind beispielhaft eine und zum Teil auch mehrere Anwendungsformen genannt: Acetochlor, Acibenzolar, Acibenzolar-S-methyl, Acifluorfen, Acifluorfensodium, Aclonifen, Alachlor, Allidochlor, Alloxydim, Alloxydim-sodium, Ametryn, Amicarbazone, Amidochlor, Amidosulfuron, Aminopyralid, Amitrole, Ammoniumsulfamat, Ancymidol, Anilofos, Asulam, Atrazine, Azafenidin, Azimsulfuron, Aziprotryn, BAH-043, BAS-140H, BAS-693H, BAS-714H, BAS-762H, BAS-776H, BAS-800H, Beflubutamid, Benazolin, Benazolin-ethyl, Bencarbazone, Benfluralin, Benfuresate, Bensulide, Bensulfuron-methyl, Bentazone, Benzfendizone, Benzobicyclon, Benzofenap, Benzofluor, Benzoylprop, Bifenox, Bilanafos, Bilanafosnatrium, Bispyribac, Bispyribac-natrium, Bromacil, Bromobutide, Bromofenoxim, Bromoxynil, Bromuron, Buminafos, Busoxinone, Butachlor, Butafenacil, Butamifos, Butenachlor, Butralin, Butroxydim, Butylate, Cafenstrole, Carbetamide, Cartentrazone, Carfentrazone-ethyl, Chlomethoxyfen, Chloramben, Chlorazifop, Chlorazifop-butyl, Chlorbromuron, Chlorbufam, Chlorfenac, Chlorfenac-natrium, Chlorfenprop, Chlorflurenol, Chlorflurenol-methyl, Chloridazon, Chlorimuron, Chlorimuron-ethyl, Chlormequat-chlorid, Chlomitrofen, Chlorophthalim, Chlorthaldimethyl, Chlorotoluron, Chlorsulfuron, Cinidon, Cinidon-ethyl, Cinmethylin, Cinosulfuron, Clethodim, Clodinafop Clodinafop-propargyl, Clofencet, Clomazone, Clomeprop, Cloprop, Clopyralid, Cloransulam, Cloransulam-methyl, Cumyluron, Cyanamide, Cyanazine, Cyclanilide, Cycloate, Cyclosulfamuron, Cycloxydim, Cycluron, Cyhalofop, Cyhalofop-butyl, Cyperquat, Cyprazine, Cyprazole, 2,4-D, 2,4-DB, Daimuron/Dymron, Dalapon, Daminozide, Dazomet, n-Decanol, Desmedipham, Desmetryn, Detosyl-Pyrazolate (DTP), Diallate, Dicamba, Dichlobenil, Dichlorprop, Dichlorprop-P, Diclofop, Diclofop-methyl, Diclofop-P-methyl, Diclosulam, Diethatyl, Diethatyl-ethyl, Difenoxuron, Difenzoquat, Diflufenican, Diflufenzopyr, Diflufenzopyr natrium, Dimefuron, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Dipropetryn, Diquat, Diquat-dibromide, Dithiopyr, Diuron, DNOC, Eglinazine-ethyl, Endothal, EPTC, Esprocarb, Ethalfluralin, Ethametsulfuron-methyl, Ethephon, Ethidimuron, Ethiozin, Ethofumesate, Ethoxyfen, Ethoxyfen-ethyl, Ethoxysulfuron, Etobenzanid, F-5331, d.h. N-[2-Chlor-4-fluor-5-[4-(3fluorpropyl)-4,5-dihydro-5-oxo-1H-tetrazol-1-yl]-phenyl]-ethansulfonamid, Fenoprop, Fenoxaprop, Fenoxaprop-P, Fenoxaprop-ethyl, Fenoxaprop-P-ethyl, Fentrazamide, Fenuron, Flamprop, Flamprop-M-isopropyl, Flamprop-M-methyl, Flazasulfuron, Florasulam, Fluazifop, Fluazifop-P, Fluazifop-butyl, Fluazifop-P-butyl, Fluazolate, Flucarbazone, Flucarbazone-sodium, Flucetosulfuron, Fluchloralin, Flufenacet (Thiafluamide), Flufenpyr, Flufenpyr-ethyl, Flumetralin, Flumetsulam, Flumiclorac, Flumlolorac-pentyl, Flumioxazin, Flumipropyn, Fluometuron, Fluorodifen, Fluoroglycofen, Fluoroglycofen-ethyl, Flupoxam, Flupropacil, Flupropanate, Flupyrsulfuron, Flupyrsulfuron-methyl-sodium, Flurenol, Flurenol-butyl, Fluridone, Flurochloridone, Fluroxypyr, Fluroxypyr-meptyl, Flurprimidol, Flurtamone, Fluthiacet, Fluthlacet-methyl, Fluthiamide, Fomesafen, Foramsulfuron, Forchlorfenuron, Fosamine, Furyloxyfen, Gibberellinsäure, Glufosinate, L-Glufosinate, L-Glufosinate-ammonium, Glufosinate-ammonium, Glyphosate, Glyphosate-isopropylammonium, H-9201, Halosafen, Halosulfuron, Halosulfuronmethyl, Haloxyfop, Haloxyfop-P, Haloxyfop-ethoxyethyl, haloxyfop-P-ethoxyethyl, Haloxyfop-methyl, Haloxyfop-P-methyl, Hexazinone, HNPC-9908, HOK-201, HW-02, Imazamethabenz, Imazamethabenz-methyl, Imazamox, Imazapic, Imazapyr, Imazaquin, Imazethapyr, Imazosulfuron, Inabenfide, Indanofan, Indolessigsäure (IAA), 4-Indol-3-ylbuttersäure (IBA), lodosulfuron, lodosulfuron-methyl-natrium, Ioxynil, Isocarbamid, Isopropalin, Isoproturon, Isouron, Isoxaben, Isoxachlortole, Isoxaflutole, Isoxapyrifop, KUH-043, KUH-071, Karbutilate, Ketospiradox, Lactofen, Lenacil, Linuron, Maleinsäurehydrazid, MCPA, MCPB, MCPB-methyl, -ethyl und - natrium, Mecoprop, Mecoprop-natrium, Mecoprop-butotyl, Mecoprop-P-butotyl, Mecoprop-P-dimethylammonium, Mecoprop-P-2-ethylhexyl, Mecoprop-P-kalium, Mefenacet, Mefluidide, Mepiquat-chlorid, Mesosulfuron, Mesosulfuron-methyl, Mesotrione, Methabenzthiazuron, Metam, Metamifop, Metamitron, Metazachlor, Methazole, Methoxyphenone, Methyldymron, 1-Methylcyclopropen, Methylisothiocyanat, Metobenzuron, Metobenzuron, Metobromuron, Metolachlor, S-Metolachlor, Metosulam, Metoxuron, Metribuzin, Metsulfuron, Metsulfuron-methyl, Molinate, Monalide, Monocarbamide, Monocarbamide-dihydrogensulfat, Monolinuron, Monosulfuron, Monuron, MT 128, MT-5950, d.h. N-[3-Chlor-4-(1-methylethyl)-phenyl]-2-methylpentanamid, NGGC-011, Naproanilide, Napropamide, Naptalam, NC-310, d.h. 4-(2,4-dichlorobenzoyl)-1-methyl-5-benzyloxypyrazole, Neburon, Nicosulfuron, Nipyraclofen, Nitralin, Nitrofen, Nitrophenolat-natrium (Isomerengemisch), Nitrofluorfen, Nonansäure, Noflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquat-dichlorid, Pelargonsäure (Nonansäure), Pendimethalin, Pendralin, Penoxsulam, Pentanochlor, Pentoxazone, Perfluidone, Pethoxamid, Phenisopham, Phenmedipham, Phenmedipham-ethyl, Picloram, Picolinafen, Pinoxaden, Piperophos, Pirifenop, Pirifenop-butyl, Pretilachlor, Primisulfuron, Primisulfuron-methyl, Probenazole, Profluazol, Procyazine, Prodiamine, Prifluraline, Profoxydim, Prohexadione, Prohexadione-calcium, Prohydrojasmone, Prometon, Prometryn, Propachlor, Propanil, Propaquizafop, Propazine, Propham, Propisochlor, Propoxycarbazone, Propoxycarbazone-natrium, Propyzamide, Prosulfalin, Prosulfocarb. Prosulfuron, Prynachlor, Pyraclonil, Pyraflufen, Pyraflufen-ethyl, Pyrasulfotole, Pyrazolynate (Pyrazolate), Pyrazosuffuron-ethyl, Pyrazoxyfen, Pyribambenz, Pyribambenz-isopropyl, Pyribenzoxim, Pyributicarb, Pyridafol, Pyridate, Pyriftalid, Pyriminobac, Pyriminobacmethyl, Pyrimisulfan, Pyrithiobac, Pyrithiobac-natrium, Pyroxasulfone, Pyroxsulam, Quinclorac, Quinmerac, Quinoclamine, Quizalofop, Quizalofop-ethyl, Quizalofop-P, Quizalofop-P-ethyl, Quizalofop-P-tefuryl, Rimsulfuron, Secbumeton, Sethoxydim, Siduron, Simazine, Simetryn, SN-106279, Sulcotrione, Sulfallate (CDEC), Sulfentrazone, Sulfometuron, Sulfometuron-methyl, Sulfosate (Glyphosatetrimesium), Sulfosulfuron, SYN-523, SYP-249, SYP-298, SYP-300, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, TH-547, Thenylchlor, Thiafluamide, Thiazafluron, Thiazopyr, Thidiazimin, Thidiazuron, Thiencarbazone, Thiencarbazone-methyl, Thifensulfuron, Thifensulfuron-mothyl, Thiobencarb, Tiocarbazil, Topramezone, Tralkoxydim, Triallate, Triasulfuron, Triaziflam, Triazofenamide, Tribenuron, Tribenuron-methyl, Tribufos, Trichloressigsäure (TCA), Triclopyr, Tridiphane, Trietazine, Trifloxysulfuron, Trifloxysulfuron-natrium, Trifluralin, Triflusulfuron, Triflusulfuron-methyl, Trimeturon, Trinexapac, Trinexapac-ethyl, Tritosulfuron, Tsitodef, Uniconazole, Uniconazole-P, Vemolate, ZJ-0166, ZJ-0270, ZJ-0543, ZJ-0862 sowie die folgenden Verbindungen:

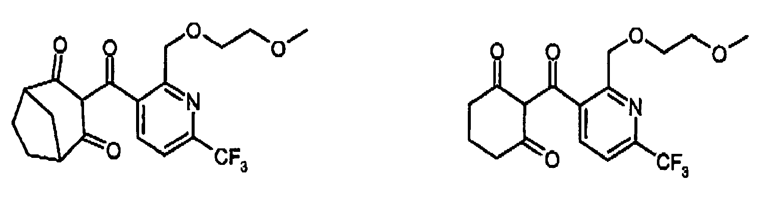

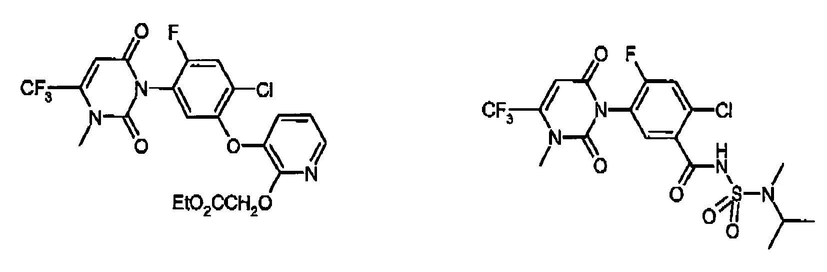

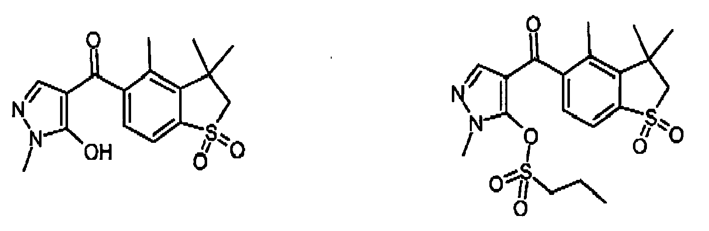

Bevorzugt sind Herbizide, wie Bromoxynil, Diflufenican, Ethoxysulfuron, Fenoxaprop, Fenoxaprop-P, Fenoxaprop-ethyl, Fenoxaprop-P-ethyl, Flufenacet, Foramsulfuron, Glufosinate, L-Glufosinate, L-Glufosinate-ammonium, Glufosinate-ammonium, Glyphosate, Glyphosate-isopropylammonium, lodosulfuron, lodosulfuron-methyl-natrium, loxynil, Isoxaflutole, Mecoprop, Mecoprop-natrium, Mecoprop-butotyl, Mecoprop-P-butotyl, Mecoprop-P-dimethylammonium, Mecoprop-P-2-ethylhexyl, Mecoprop-P-kalium, Mefenacet, Metosulam, Metribuzin, Propoxycarbazone, Propoxycarbazone-natrium, Tembotrione, Thiencarbazone, Thiencarbazone-methyl; und Pflanzenwachstumsregulatoren, wie Cyclanilide, Ethephon, Tribufos und Thidiazuron.

Beispiele für Safener sind Mefenpyr-diethyl, Fenchlorazol-ethyl, Isoxadifen-ethyl, Cloquintocet, Cloquintocet-mexyl, Fenclorim, Dichlormid, Benoxacor, DKA-24, AD-67 (MON 4660), Dicyclonon, Furilazole, Oxabetrinil, Fluxofenim, Cyometrinil (CGA-43089), Flurazole, Naphthalic anhydrid, CL 304415, MG 191, TI-35, Cyprosulfamide, 4-iso-propylaminocarbonyl-N-(2-methoxybenzoyl)benzolsulfonamid) sowie Derivate der Dichlorphenylpyrazolcarbonsäure (EP-A-333131 und EP-A-269806), Verbindungen vom Typ der Triazolcarbonsäuren (EP-A-174562 und EP-A-346620), Verbindungen vom Typ der (5-Chlor-8-chinolinoxy)-malonsäure (EP-A-582198), Wirkstoffe vom Typ der Phenoxyessig- bzw. -propionsäurederivate bzw. der aromatischen Carbonsäuren (2,4-D, Mecoprop, MCPA, Dicamba), R-29148, PPG-1292, Dimepiperate (MY-93), Daimuron (SK 23), Cumyluron (JC-940), Methoxyphenon (NK 049), CSB (CAS- Nr. 54091-06-4), N-Acylsulfonamide (WO-A-97/45016).

Bevorzugt sind Safener wie Mefenpyr-diethyl, Cloquintocet-mexyl, Isoxadifen-ethyl, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid oder Fenchlorazol-ethyl.

Eine besondere Ausführungsform der vorliegenden Erfindung ist der gemeinsame Einsatz von Herbiziden und Safener als Mischungen in den Formulierungen. Die Gewichtsverhältnisse von Herbizid(mischung) zu Safener hängt im Allgemeinen von der Aufwandmenge an Herbizid und der Wirksamkeit des jeweiligen Safeners ab und kann innerhalb weiter Grenzen variieren, beispielsweise im Bereich von 200:1 bis 1:200, vorzugsweise 100:1 bis 1:100, insbesondere 20:1 bis 1:20.

Beispiele für Fungizide sind:
Inhibitoren der Nucleinsäure Synthese, insbesondere Benalaxyl, Benalaxyl-M, Bupirimat, Clozylacon, Dimethirimol, Ethirimol, Furalaxyl, Hymexazol, Mefenoxam, Metalaxyl, Metalaxyl-M, Ofurace, Oxadixyl, Oxolinsäure;
Inhibitoren der Mitose und Zellteilung, insbesondere Benomyl, Carbendazim, Diethofencarb, Ethaboxam, Fuberidazole, Pencycuron, Thiabendazol, Thiophanatmethyl, Zoxamide;
Inhibitoren der Atmungskette Komplex I, insbesondere Diflumetorim;
Inhibitoren der Atmungskette Komplex II, insbesondere Boscalid, Carboxin, Fenfuram. Flutolanil, Furametpyr, Furmecyclox, Mepronil, Oxycarboxin, Penthiopyrad, Thifluzamid;
Inhibitoren der Atmungskette Komplex III, insbesondere Amisulbrom, Azoxystrobin, Gyazofamid, Dimoxystrobin, Enestrobin, Famoxadon, Fenamidone, Fluoxastrobin, Kresoxim-methyl, Metominostrobin, Orysastrobin, Picoxystrobin, Pyraclostrobin, Trifloxystrobin;
Entkoppler, insbesondere Dinocap, Fluazinam, Meptyldinocap;
Inhibitoren der ATP Produktion, insbesondere Fentin-acetat, Fentin-chlorid, Fentinhydroxid, Silthiofam;
Inhibitoren der Aminosäure- und Proteinbiosynthese, insbesondere Andoprim, Blasticidin-S, Cyprodinil, Kasugamycin, Kasugamycin-hydrochlorid Hydrat, Mepanipyrim, Pyrimethanil;
inhibitoren der Signal-Transduktion, insbesondere Fenpiclonil, Fludioxonil, Quinoxyfen; Inhibitoren der Fett- und Membran Synthese, insbesondere Biphenyl, Chlozolinate, Edifenphos, Etridiazole, lodocarb, Iprobenfos (IBP), Iprodione, Isoprothiolane, Procymidone, Propamocarb, Propamocarb hydrochlorid, Pyrazophos, Tolclofosmethyl, Vinclozolin;
Inhibitoren der Ergosterol Biosynthese, insbesondere Aldimorph, Azaconazol, Bitertanol, Bromuconazol, Cyproconazol, Diclobutrazol, Difenoconazol, Diniconazol, Diniconazol-M, Dodemorph, Dodemorphacetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-cis, Hexaconazol, Imazalil, Imazalilsulfat, Imibenconazol, Ipconazol, Metconazol, Myclobutanil, Naftifin, Nuarimol, Oxpoconazol, Paclobutrazol, Pefurazoat, Penconazol, Prochloraz, Propiconazol, Prothioconazol, Pyributicarb, Pyrifenox, Simeconazol, Spiroxamin, Tebuconazol, Terbinafin, Tetraconazol. Triadimefon, Triadimenol, Tridemorph, Triflumizol, Triforin, Triticonazol, Uniconazol, Viniconazol, Voriconazol;
Inhibitoren der Zellwand Synthese, insbesondere Benthiavalicarb, Dimethomorph, Flumorph, Iprovalicarb, Mandipropamid, Polyoxins, Polyoxorim, Validamycin A; Inhibitoren der Melanin Biosynthese, insbesondere Capropamid, Diclocymet, Fenoxanil, Phtalid, Pyroquilon, Tricyclazol;
Resistenzinduktoren, insbesondere Acibenzolar-S-methyl, Probenazol, Tiadinil;
Multisite, insbesondere Bordeaux Mischung, Captafol, Captan, Chlorothalonil, Kupfemaphthenat, Kupferoxid, Kupferoxychlorid, Kupferpräparate wie: Kupferhydroxid, Kupfersulfat, Dichlofluanid, Dithianon, Dodin, Dodin freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Metiram Zink, Oxin-Kupfer, Propineb, Schwefel und Schwefelpräparate enthaltend Calciumpolysulphid, Thiram, Tolylfluanid, Zineb, Ziram;
Fungizide ausgewählt aus der Gruppe: (2E)-2-{2-{[6-(3-Chloro-2-methylphenoxy)-5-fluoropyrimidin-4-yl]oxy}phenyl)-2-(methoxyimino)-N-methylacetamide, (2E)-2-{2-[({[(1E)-1-(3-{[(E)-1-Fluoro-2-phenylvinyl]oxy}phenyl)ethylidene]amino}oxy)methyl]phenyl}-2-(methoxyimino)-N-methylacetamide, 1-(4-Chlorophenyl)-2-(1H-1,2,4-triazol-1-yl)cycloheptanol, 1-[(4-Methoxyphenoxy)methyl]-2,2-dimethylpropyl-1H-imidazole-1-carboxylate, 1-Methyl-N-[2-(1,1,2,2-tetrafluoroethoxy)phenyl]-3-(trifluoromethyl)-1 H-pyrazole-4-carboxamide, 2,3,5,6-Tetrachloro-4-(methylsulfonyl)pyridine, 2-Butoxy-6-iodo-3-propyl-4H-chromen-4-one, 2-Chloro-N-(1,1,3-trimethyl-2,3-dihydro-1H-inden-4-yl)nicotinamide, 2-Phenylphenol and salts, 3-(Difluoromethyl)-1-methyl-N-[2-(1,1,2,2-tetrafluoroethoxy)phenyl]-1H-pyrazole-4-carboxamide, 3-(Difluoromethyl)-N-[(9R)-9-isopropyl-1,2,3,4-tetrahydro-1,4-methanonaphthalen-5-yl]-1-methyl-1H-pyrazole-4-carboxamide, 3-(Difluoromethyl)-N-[(9S)-9-isopropyl-1,2,3,4-tetrahydro-1,4-methanonaphthalen-5-yl]-1-methyl-1H-pyrazole-4-carboxamide, 3-(Difluoromethyl)-N-[4'-(3,3-dimethylbut-1-yn-1-yl)biphenyl-2-yl]-1-methyl-1H-pyrazole-4-carboxamide, 3,4,5-Trichloropyridine-2,6-dicarbonitrile, 3-[5-(4-Chlorophenyl)-2,3-dimethylisoxazolidin-3-yl]pyridine, 3-Chloro-5-(4-chlorophenyl)-4-(2,6-difluorophenyl)-6-methylpyridazine, 4-(4-Chlorophenyl)-5-(2,6-difluorophenyl)-3,6-dimethylpyridazine, 5-Chloro-7-(4-methylpiperidin-1-yl)-6-(2,4,6-trifluorophenyl)[1,2,4]triazolo[1,5-a]pyrimidine, 8-Hydroxyquinoline sulfate, Benthiazole, Bethoxazin, Capsimycin, Carvone, Chinomethionat, Cufraneb, Cyflufenamid, Cymoxanil, Dazomet, Debacarb, Dichlorophen, Diclomezine, Dicloran, Difenzoquat, Difenzoquat methylsulphate, Diphenylamine, Ecomate, Ferimzone, Flumetover, Fluopicolide, Fluoroimide, Flusulfamide, Fosetyl-aluminium, Fosetylcalcium, Fosetyl-sodium, Hexachlorobenzene, Irumamycin, Isotianil, Methasulfocarb, Methyl (2E)-2-{2-[({cyclopropyl[(4-methoxyphenyl)imino]methyl}thio)methyl]phenyl}-3-methoxyacrylate, Methyl 1-(2,2-dimethyl-2,3-dihydro-1H-inden-1-yl)-1H-imidazole-5-carboxylate, Methylisothiocyanate, Metrafenone, Mildiomycin, N-(3',4'-dichloro-5-fluorobiphenyl-2-yl)-3-(difluoromethyl)-1-methyl-1H-pyrazole-4-carboxamide, N-(3-ethyl-3,5,5-trimethylcyclohexyl)-3-(formylamino)-2-hydroxybenzamide, N-(4-chloro-2-nitrophenyl)-N-ethyl-4-methylbenzenesulfonamide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]propanamide, N-[(5-bromo-3-chloropyridin-2-yl)methyl]-2,4-dichloronicotinamide, N-[1-(5-bromo-3-chloropyridin-2-yl)ethyl]-2,4-dichloronicotinamide, N-[1-(5-bromo-3-chloropyridin-2-yl)ethyl]-2-fluoro-4-iodonicotinamide, N-[2-(1,3-dimethylbutyl)phenyl]-5-fluoro-1,3-dimethyl-1H-pyrazole-4-carboxamide, N-{(Z)-[(cyclopropylmethoxy)imino][6-(difluoromethoxy)-2,3-difluorophenyl]methyl}-2-phenylacetamide, N-(2-[1,1'-bi(cyclopropyl)-2-yl]phenyl} -3-(difluoromethyl)-1-methyl-1H-pyrazole-4-carboxamide, N-{2-[3-chloro-5-(trifluoromethyl)pyridin-2-yl]ethyl}-2-(trifluoromethyl)benzamide, Natamycin, N-ethyl-N-methyl-N'-{2-methyl-5-(trirfluoromethyl)-4-[3-(trimethylsilyl)propoxy]phenyl}imidoformamide, N-ethyl-N-methyl-N'-{2-methyl-5-(difluoromethyl)-4-[3-(trimethylsilyl)propoxy]phenyl}imidoformamide, Nickel dimethyldithiocarbamate, Nitrothal-isopropyl, O-{1-[(4-methoxyphenoxy)methyl]-2,2-dimethylpropyl}1H-imidazole-1-carbothioate, Octhilinone, Oxamocarb, Oxyfenthiin, Pentachlorophenol und Salze, Phosphorsäure und ihre Salze, Piperalin, Propamocarb fosetylate, Propanosine-sodium, Proquinazid, Pyribencarb, Pyrrolnitrine, Quintozene, S-allyl-5-amino-2-isopropyl-4-(2-methylphenyl)-3-oxo-2,3 dihydro-1H-pyrazole-1-carbothioate, Tecloftalam, Tecnazene, Triazoxide, Trichlamide, Valiphenal, Zarilamid.

Bevorzugt sind Fungizide wie Bitertanol, Bromuconazol, Carbendazim, Carproamid, Cyproconazole, Edifenphos, Fenanidone, Fenhexamid, Fentins, Fluquinconazole, Fosetyl Aluminium, Iprodione, Iprovalicarb, Pencycuron, Prochloraz, Propamocarb HCI, Propineb, Pyrimethanil, Spiroxamine, Tebuconazole, Tolylfluanid-Dichlofluanid, Triadimefon, Triadimenol, Trifloxystrobin.

Beispiele für Insektizide, Akarizide, Nematizide sind:
Acetylcholinesterase (AChE) Inhibitoren:
   Carbamate, zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate;
   Organophosphate, zum Beispiel Acephate, Azamethiphos, Azinphos (-methyl, - ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos(-methyl/- ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion;
   Natrium-Kanal-Modulatoren / Spannungsabhängige Natrium-Kanal-Blocker: Pyrethroide, zum Beispiel Acrinathrin, Allethrin (d-cis-trans, d-trans), Beta-Cyfluthrin, Birfenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1 R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1 R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1 R- isomer), Tralomethrin, Transfluthrin, ZXI 8901, Pyrethrins (pyrethrum);
   DDT;
   Oxadiazine, zum Beispiel Indoxacarb;
   Semicarbazone, zum Beispiel Metaflumizon (BAS320 I);
Acetylcholin-Rezeptor-Agonisten/-Antagonisten:
   Chloronicotinyle, zum Beispiel Acetamiprid, Clothianidin, Dinotefuran, Imidacloprid, Nitenpyram, Nithiazine, Thiacloprid, Thiamethoxam
   Nicotine, Bensultap, Cartap;
Acetylcholin-Rezeptor-Modulatoren:
   Spinosyne, zum Beispiel Spinosad, Spinetoram;
GABA-gesteuerte Chlorid-Kanal-Antagonisten:
   Organochlorine, zum Beispiel Camphechlor, Chlordane, Endosulfan, Gamma-HCH, HCH, Heptachlor, Lindane, Methoxychlor;
   Fiprole, zum Beispiel Acetoprole, Ethiprole, Fipronil, Pyrafluprole, Pyriprole, Vaniliprole;
Chlorid-Kanal-Aktivatoren:
   Mectine, zum Beispiel Abamectin, Emamectin, Emamectin-benzoate, lvermectin, Lepimectin, Milbemycin;
Juvenilhormon-Mimetika:
   zum Beispiel Diofenolan, Epofenonane, Fenoxycarb, Hydroprene, Kinoprene, Methoprene, Pyriproxifen, Triprene;
Ecdysonagonisten/disruptoren:
   Diacylhydrazine, zum Beispiel Chromafenozide, Halofenozide, Methoxyfenozide, Tebufenozide;
Inhibitoren der Chitinbiosynthese:
   Benzoylhamstoffe, zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron;
   Buprofezin;
   Cyromazine;
Inhibitoren der oxidativen Phosphorylierung, ATP-Disruptoren:
   Diafenthiuron;
Organozinnverbindungen, zum Beispiel Azocyclotin, Cyhexatin, Fenbutatin-oxide Entkoppler der oxidativen Phosphorylierung durch Unterbrechung des H-Protongradienten:
   Pyrrole, zum Beispiel Chlorfenapyr;
   Dinitrophenole, zum Beispiel Binapacyrl, Dinobuton, Dinocap, DNOC, Meptyldinocap;
Site-I-Elektronentransporinhibitoren:
   METI's, zum Beispiel Fenazaquin, Fenpyroximate, Flufenerim, Pyrimidifen, Pyridaben, Tebufenpyrad, Tolfenpyrad;
   Hydramethylnon;
   Dicofol;
Site-II-Elektronentransportinhibitoren:
   Cyenopyrafen, Cyflumetofen, Rotenone;
Site-III-Elektronentransportinhibitoren:
   Acequinocyl, Fluacrypyrim;
Mikrobielle Disruptoren der Insektendarmmembran:
   Bacillus thuringiensis-Stämme;
Inhibitoren der Fettsynthese:
   Tetronsäuren, zum Beispiel Spirodiclofen, Spiromesifen;
   Tetramsäuren, zum Beispiel Spirotetramat, cis-3-(2,5-dimethylphenyl)-4-hydroxy-8-methoxy-1-azaspiro[4.5]dec-3-en-2-on;
Oktopaminerge Agonisten:
   zum Beispiel Amitraz;
Inhibitoren der Magnesium-stimulierten ATPase:
   Propargite;
Nereistoxin-Analoge, zum Beispiel Thiocyclam hydrogen oxalate, Thiosultap-sodium; Agonisten des Ryanodin-Rezeptors:
   Benzoesäuredicarboxamide, zum Beispiel Flubendiamid;
   Anthranilamide, zum Beispiel Chlorantraniliprole (Rynaxypyr, 3-bromo-N-{4-chloro-2-methyl-6-[(methylamino)carbonyl]phenyl}-1-(3-chloropyridin-2-yl)-1H-pyrazole-5-carboxamide);
Biologika, Hormone oder Pheromone:
   Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen:
   Begasungsmittel, zum Beispiel Aluminium phosphide, Methyl bromide, Sulfuryl fluoride;
   Fraßhemmer, zum Beispiel Flonicamid, Pymetrozine, Pyrifluquinazone; Milbenwachstumsinhibitoren, zum Beispiel Clofentezine, Diflovidiazin, Etoxazole, Hexythiazox,
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Dicyclanil, Fenoxacrim, Fentrifanil, Flubenzimine, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene, Verbutin.

Bevorzugt sind Insektizide wie Acetamiprid, Acrinathrin, Aldicarb, Amitraz, Azinphosmethyl, Beta-Cyfluthrin, Carbaryl, Cyfluthrin, Cypermethrin, Deltamethrin, Endosulfan, Ethoprophos, Fenamiphos, Fenthion, Imidacloprid, Methamidophos, Methiocarb, Niclosamide, Oxydemeton-methyl, Phosalone, Prothiophos, Silafuofen, Thiacloprid, Thiodicarb, Tralomethrin, Triazophos, Trichlorfon, Triflumuron; ganz besonders bevorzugt aus der Gruppe Chloronicotinyle wie Acetamiprid, Clothianidin, Dinotefuran, Imidacloprid, Nitenpyram, Nithiazine, Thiacloprid, Thiamethoxam, insbesondere Thiacloprid.

Bevorzugte Pflanzenschutzmittel-Wirkstoffe (agrochemische Wirkstoffe) sind Diflufenican, Ethoxysulfuron, Flufenacet, Glufosinate, L-Glufosinate, L-Glufosinate-ammonium, Glufosinate-ammonium, Glyphosate, Glyphosate-isopropylammonium, Iodosulfuron, Iodosulfuron-methyl-natrium, Mefenpyr-diethyl, Cloquintocet-mexyl, Isoxadifen-ethyl, Cyprosulfamide, Tebuconazole, Fluquinconazole, Imidacloprid und Thiacloprid.

Der Anteil der Pflanzenschutzmittel-Wirkstoffe aus der Gruppe der Herbizide, Safener, Insektizide und Fungizide (agrochemische Wirkstoffe) in den Wirkstoff-Granulatpartikeln gemäß der vorliegenden Erfindung richtet sich nach den üblichen, für eine Wirkung notwendigen Dosierungen und kann daher je nach Kultur entsprechend variieren. Im Allgemeinen kann der Anteil daher von 0,001 - 90 Gew.-%, bevorzugt 0,01 - 70 Gew.-%, besonders bevorzugt 0,1 - 50 Gew.-% bezogen auf die Wirkstoff-Granulatpartikel betragen.

Die flächenbezogenen Aufwandmengen der agrochemischen Wirkstoffe liegen im allgemeinen zwischen 0,5 und 2000 g AS/ha (AS = Aktivsubstanz, d.h. Aufwandmenge bezogen auf den aktiven Wirkstoff), bevorzugt zwischen 1 und 1000 g AS/ha.

Obgleich sich die vorangegangene Darstellung auf wasserdispergierbare Granulatpartikeln (WG) konzentriert hat, gilt erfindungsgemäß dies auch bei nicht dispergierbaren Granulatpartikeln. Mit dem Begriff "Granulatpartikel", werden einzelne Granulat bezeichnet, die in Form von Granulat-Körnem, auch synonym als "Granalien" bezeichnet, vorliegen. Mit dem Begriff Granulatpartikel sind alle geeigneten Granulat-Formulierungstypen (Buchstaben-Codes gemäß "Catalogue of PesticideFormulation Types and International Coding System, Technical monograph No. 2, 5th Edition, March 2002; CropLife International, Brussels, Belgium; siehe "The Pesticide Manual", 14. Auflage 2006/2007, oder "e-Pesticide Manual", Version 4, 2006), wie beispielsweise WG (Water dispersible granule), GR (Granule), SG (Water soluble granule), MG (Microgranule), GG (Macrogranule), aber auch andere geeignete Formulierungstypen, wie beispielsweise WP (Wettable powder) umfasst.

Der Begriff "mit im wesentlichen isodimensionalen Form" bedeutet, dass die Wirkstoff-Granulatpartikel näherungsweise kugelförmig sind. Die Granulatpartikel gemäß der vorliegenden Erfindung sind durch eine weitgehend kugel- bis klumpenförmige Gestalt gekennzeichnet ("Popkom-artige Agglomerate") und verfügen in ihrer Mehrheit über Durchmesser (Querschnittsbreiten) im wesentlichen von 45 µ bis 2 mm. Die Durchmesser der isodimensionalen Granulatpartikel und deren Einheitlichkeit haben einen bedeutenden Einfluss auf die mögliche Entmischung der Granulatpartikel im späteren Mischungs-Gebinde. Die Verfahren zur Herstellung der isodimensionalen Granulatpartikel bieten hier vorteilhaft einen hohen Grad an Kontrolle des Durchmessers und der Einheitlichkeit und erlauben damit im normalen Ablauf der Produktion die Einstellung dieser Parameter (z.B. Granulat-Komgrößentrennung nach der Herstellung).

Zu den geeigneten Verfahren zur Herstellung der isodimensionalen Granulatpartikel gehören alle Agglomerations-(Granulierungs-)Verfahren, wie beispielsweise Fließbett (fluid bed), Teller, Scheibe, Hochscherung (syn, Schugi-Verfahren), Sprühtrocknung u,ä., aber auch die Pastenextrusion, wo das Extrudat eine Nachbehandlung erhält, um ihm eine isodimensionale Form zu vermitteln (z.B. WO 89100079). Die nach diesen Verfahren erzeugten Granulatpartikel werden allgemein anschließend durch Sieben klassifiziert, zur Einstellung des Durchmessers und der Einheitlichkeit der Granulatpartikel. Die hierbei abgesiebten "Überkom"- und "Feinkom"- Fraktionen werden dann häufig in der weiteren Produktion wieder aufgearbeitet.

Die Herstellung der isodimensionalen Granulatpartikel beispielsweise im Fließbett-Verfahren besteht aus der Herstellung einer Aufschlämmung (Slurry). Hierzu wird Wasser in einem Kessel vorgelegt und gerührt. Antischaummittel und Formulierungshilfsmittel werden zugefügt, gefolgt von Wirkstoff(en) und Granulatträgerstoffen. Dies wird vermischt bis eine homogene Aufschlämmung entstanden ist. Diese wird dann nass vermahlen, z.B. mit einer Kugelmühle, bis der gewünschte Partikeldurchmesser erreicht ist. Die Weiterverarbeitung erfolgt dann im Fließbett-Verfahren durch Trocknung der Aufschlämmung nach Eindüsen in einem Fließbett-Trockner. Anschließend werden die "Überkorn"- und "Feinkom"- Fraktionen abgesiebt.

Die Herstellung der isodimensionalen Granulatpartikel beispielsweise im Hochscherungs-Verfahren besteht aus der pulverförmigen Vormischung (Premix). Hierzu werden alle Inhalts- und Wirkstoffe mit Granulatträgerstoffen vermischt und anschließend trocken vermahlen bis der gewünschte Partikeldurchmesser erreicht ist. Die Weiterverarbeitung erfolgt dann durch befüllen einer "Schugi"-Granulierungsapparatur (Hochscherungsverfahren) mit der Vormischung und dem Eindüsen von Wasser. Die agglomerierte Vormischung wird anschließend in einem Fließbett-Trockner getrocknet Auch hier werden anschließend die "Überkom"- und "Feinkom"- Fraktionen abgesiebt.

Mit Agglomerations-(Granulierungs-)Verfahren können isodimensionale Granulatpartikeln erzeugt werden, die von Charge zu Charge und sogar von Produkt zu Produkt im Bezug auf sehr gleich bleibend sind. Wegen ihrer isodimensionalen Form lassen sich die Granulatpartikeln hervorragend durch Sieben klassifizieren, um die für auf eine homogene Mischung störenden "Überkom-" und "Feinkorn-" Fraktionen, die eine Entmischung im späteren Mischungs-Gebinde bewirken, zu entfernen.

Alle für die Herstellung isodimensionaler Granulatpartikel notwendige Hilfs- und Zusatzstoffe einschließlich deren Dosierungen wechseln je nach Herstellungszweck. Sie sind dem Fachmann allgemein bekannt und werden beispielsweise beschrieben in: Winnacker-Küchler, "Chemische Technologie", Band 7, C. Hanser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London; Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hanser Verlag München, 4. Aufl. 1986.

Ebenso sind dem Fachmann allgemein bekannt die Herstellungsverfahren zur Erstellung der Mischungen unterschiedlicher Pflanzenschutzmittel-Wirkstoff-Granulatpartikel mit im wesentlichen isodimensionaler Form, im folgenden auch als "Mischungs-Gebinde" bezeichnet. Es können einfache Verfahren Anwendung finden, wie beispielsweise die Anwendung eines Trommelmischers, bis hin zu speziellen Mischungsapparaturen, wie beispielsweise in WO 94/24861 A1 beschrieben. Entscheidend hierbei ist, dass beim Mischvorgang keine bis nur eine geringe Reibung zwischen den Granulatpartikeln stattfindet.

Die Granulatpartikel können hierbei wasserdispergierbar, wasserlöslich und/oder nicht dispergierbar sein. Von besonderer Bedeutung ist hierbei auch die Dichte der einzelnen Pflanzenschutzmittel-Wirkstoff-Granulatpartikel, wobei gilt, dass entsprechend hohe Dichten mit allgemein über 45 g/100 ml Granulatvolumen, insbesondere über 60 g/100 ml, für homogene, nicht mehr entmischbare Mischungs-Gebinde, neben den anderen oben genannten Spezifikationen, notwenig sind. Daneben sind geringe Dichteunterschiede vorteilhaft für homogene, nicht mehr entmischbare Mischungs-Gebinde.

So lassen sich Mischungs-Gebinde von isodimensionalen Granulatpartikeln aus mindestens zwei oder mehreren verschiedenen Pflanzenschutzmittel-Wirkstoff-Granulatpartikeln herstellen, deren Zusammensetzung nicht mehr entmischbar ist und die daher beim Lagern, Handhaben und Ausbringen homogen bleiben. Diese können dann gemäß der vorliegenden Erfindung gleichförmig dosiert werden, wodurch eine vereinfachte Zubereitung eines breiten Bereichs von Mischverhältnissen ermöglich ist, um den Anforderungen der verschiedenen Märkte zu genügen und somit viele Konfektionierungs- und Bevorratungsprobleme zu lösen.

Überraschender Weise zeigte sich, dass mit den oben genannten homogenen Mischungs-Gebinden (Mischungen unterschiedlicher Pflanzenschutzmittel-Wirkstoff-Granulatpartikel, vorteilhaft mit im wesentlichen isodimensionaler Form) mischungsunverträgliche Pflanzenschutzmittel-Wirkstoffe lagerstabil miteinander gemischt werden können. Dies ermöglicht somit den erfindungsgemäßen Einsatz dieser Mischungs-Gebinde für Pflanzenschutzmittel-Wirkstoffe, die sich in Mischung mit anderen Wirkstoffen auf bzw. in einem Granulatpartikel bisher als "inkompatibel" (unverträglich) gezeigt hatten. Die Bestimmung der "Inkompatibilität" einzelner Wirkstoffe in einem Wirkstoffgemisch erfolgt durch die einfache Messung der noch vorhandenen Restwirkstoffmengen nach einer festgelegten Lagerdauer. Die Ursachen für diese Wirkstoff-Unverträglichkeit ("Inkompatibilität") mit anderen Wirkstoffen kann auf den unterschiedlichsten Faktoren beruhen. Es stellt jedoch ein ernstes Problem für die Formulierungsforschung dar, wenn sich vom Markt her gewünschte Wirkstoff-Mischungen aufgrund dieses Problems nicht realisieren lassen.

In Hinblick auf das Verfahren zur Herstellung von Mischungen von Pflanzenschutzmittel-Wirkstoffen in Granulatform für mischungsunverträgliche Wirkstoffe können grundsätzlich alle Verfahren zur Herstellung der Granulatpartikel verwendet werden. So können neben den oben beschriebenen Verfahren auch andere Verfahren, wie z.B. Extrusionsverfahren mit zylindrischen Granulatpartikeln, Anwendung finden. Bevorzugt sind jedoch Granulatpartikel mit einer im wesentlichen isodimensionalen Form, besonders bevorzugt sind Granulatpartikel mit einer im wesentlichen isodimensionalen Form, die in ihrer Mehrheit über einen Durchmesser von 45 µ bis 2 mm verfügen. Daneben ist es vorteilhaft, wenn die Dichte der einzelnen Pflanzenschutzmittel-Wirkstoff-Granutatpartikel über 45 g/100 ml Granulatvolumen beträgt.

Die folgenden Beispiele sollen die Erfindung veranschaulichen, jedoch nicht beschränken.

**Tabelle 1: Dichte und Durchmesser-Fraktionen von einzelnen Wirkstoff-Granulaten und einer hieraus hergestellten Mischung (Mischungs-Gebinde)**

| Parameter | Granulat 1 | Granulat 2 | Granulat 1+2 |
|---|---|---|---|
| Dichte [g/100 ml] | 71-75 | 60-64 | 63-68 |
| Trockensiebung [%] Durchmesser > 2,000 mm | 0,0 | 0,0 | 0,0 |
| Trockensiebung [%] Durchmesser 2,000-1,000 mm | 0,6 | 3,4 | 1,5 |
| Trockensiebung [%] Durchmesser 1,000- 0,500 mm | 29,9 | 29,3 | 12,4 |
| Trockensiebung [%] Durchmesser 0,500- 0,080 mm | 69,5 | 1,0 | 0,5 |
| Trockensiebung [%] Durchmesser < 0,080 mm | 0,03 | 67,7 | 86,0 |

| | | | |
|---|---|---|---|
| Erläuterungen: Granulat 1: Typ WG enthaltend Diflufenican (36 Gew.%) und lodosulfuron-Na (1 Gew.%), Herstellung: Fließbett-Verfahren; Granulat 2: Typ WG enthaltend Flufenacet (60 Gew.%), Herstellung: Hochscherungs-Verfahren; Granulat 1+2: Mischung von 10 g Granulat 1 mit 20 g Granulat 2, gemischt für 2 Stunden in einem Taumel-Mixer. | | | |

**Tabelle 2: Vergleichsversuch - Lagerung einer Granulat-Mischung (1) und einer Granulat-Co-Formulierung (2) mit gleicher Wirkstoff-Zusammensetzung**

| Wirkstoffe | Absoluter Gehalt zu Beginn der Lagerung [Gew.%] | Absoluter Gehalt nach 2 Monaten Lagerung bei 40 °C [Gew.%] | Prozentuale Änderung nach 2 Monaten Lagerung bei 40 °C [+/-%] |
|---|---|---|---|
| Granulat-Mischung (1) - Erfindungsgemäß | | | |
| Flufenacet | 39,8 | 39,2 | - 1 ,5 |
| | 40,0 | 38,3 | - 4,3 |
| | 40,6 | 39,9 | - 1,7 |
| Diflufenican | 12,5 | 12,8 | + 2,4 |
| | 12,3 | 12,1 | - 2,0 |
| | 12,1 | 12,1 | 0,0 |
| Iodosulfuron | 0,330 | 0,367 | +11,2 |
| | 0,312 | 0,360 | + 15,4 |
| | 0,378 | 0,382 | + 1,1 |
| pH-Wert | 3,6 | 3,7 | - |
| Granulat-Co-Formulierung (2) - Stand der Technik | | | |
| Flufenacet | 12,40 | 12,10 | - 2,4 |
| Diflufenican | 3,79 | 3,79 | 0,0 |
| Iodosulfuron | 0,135 | 0,039 | - 71,0 |
| pH-Wert | 3,8 | 3,9 | - |

| | | | |
|---|---|---|---|
| Erläuterungen: (1) Granulat-Mischung aus a) WG enthaltend Diflufenican und Iodosulfuron-Na und b) WG enthaltend Flufenacet, n = 3; (2) WG-Co-Formulierung enthaltend Diflufenican, lodosulfuron-Na und Flufenacet, n =1. | | | |

Die Daten des Vergleichsversuchs in Tabelle 2 zeigen, dass der Wirkstoff Iodosulfuron bei Verwendung der Granulat-Co-Formulierung (Stand der Technik) einem starken Abbau während der Lagerung unterliegt. Bei Verwendung der Granulat-Mischung (erfindungsgemäß) ist - innerhalb der Schwankungsbreiten - keine wesentliche Veränderung im Gehalt von Iodosulfuron feststellbar.

## Patentansprüche

1. Verwendung von Mischungen unterschiedlicher Pflanzenschutzmittel-Wirkstoff-Granulatpartikel mit im wesentlichen isodimensionaler Form, die beim Lagern, Handhaben und Ausbringen homogen bleiben, **dadurch gekennzeichnet, dass** mischungsunverträgliche Wirkstoffe in diesen Mischungen gemeinsam stabil gelagert werden können.

2. Verwendung gemäß Anspruch 1, **dadurch gekennzeichnet, dass** die Pflanzenschutzmittel-Wirkstoffe aus der Gruppe Herbizide, Safener, Fungizide und Insektizide ausgewählt sind.

3. Verwendung gemäß Anspruch 1 oder 2, **dadurch gekennzeichnet, dass** die Pflanzenschutzmittel-Wirkstoffe aus der Gruppe Diflufenican, Ethoxysulfuron, Flufenacet, Glufosinate, L-Glufosinate, L-Glufosinate-ammonium, Glufosinate-ammonium, Glyphosate, Glyphosate-isopropylammonium, Iodosulfuron, todosutfuron-methyl-natrium, Mefenpyr-diethyl, Cloquintocet-mexyl, Isoxadifen-ethyl, Cyprosulfamide, Tebuconazole, Fluquinconazole, lmidacloprid und Thiacloprid ausgewählt sind.

4. Verwendung gemäß einem oder mehreren der Ansprüche 1 bis 3, **dadurch gekennzeichnet, dass** die Granulatpartikel mit im wesentlichen isodimensionaler Form in ihrer Mehrheit über einen Durchmesser von 45 µ bis 2 mm verfügen.

5. Verwendung gemäß einem oder mehreren der Ansprüche 1 bis 4, **dadurch gekennzeichnet, dass** die Dichte der einzelnen Pflanzenschutzmittel-Wirkstoff-Granulatpartikel über 45 g/100 ml Granulatvolumen beträgt.

6. Verfahren zur Herstellung von Mischungen von Pflanzenschutzmittel-Wirkstoffen in Granulatform für mischungsunverträgliche Wirkstoffe, **dadurch gekennzeichnet, dass** die mischungsunverträglichen Wirkstoffe, allein oder zusammen mit mischungsverträglichen Wirkstoffen, zuerst jeweils getrennt als Granulatpartikel einer Gruppe formuliert werden, die dann anschließend miteinander gemischt werden.

7. Verfahren gemäß Anspruch 6, **dadurch gekennzeichnet, dass** die Pflanzenschutzmittel-Wirkstoffe aus der Gruppe Herbizide, Safener, Fungizide und Insektizide ausgewählt sind.

8. Verfahren gemäß Anspruch 6 oder 7, **dadurch gekennzeichnet, dass** die Granulatpartikel im wesentlichen über eine isodimensionale Form verfügen.

9. Verfahren gemäß einem oder mehreren der Ansprüche 6 bis 8, **dadurch gekennzeichnet, dass** die Granulatpartikel mit im wesentlichen isodimensionaler Form, die in ihrer Mehrheit über einen Durchmesser von 45 µ bis 2 mm verfügen.

10. Verfahren gemäß einem oder mehreren der Ansprüche 6 bis 9, **dadurch gekennzeichnet, dass** die Dichte der einzelnen Pflanzenschutzmittel-Wirkstoff-Granulatpartikel über 45 g/100 ml Granulatvolumen beträgt.
